# EUROPÄISCHE PATENTSCHRIFT

(11) **EP 0 342 332 B1**
(45) Veröffentlichungstag und Bekanntmachung des Hinweises auf die Patenterteilung: **21.07.1993**
(21) Anmeldenummer: 89104885.2
(22) Anmeldetag: 18.03.1989
(51) Int. Cl.: H02K 1/20, H02K 9/00

(54) **Elektromotor**
Electric motor
Moteur électrique

(30) Priorität: 20.05.1988 DE 8806657 U
(43) Veröffentlichungstag der Anmeldung: 23.11.1989
(73) Patentinhaber: Gerhard Berger GmbH & Co. KG Fabrik elektrischer Geräte, D-77933 Lahr (DE)
(72) Erfinder: Gfrörer, Ralf, Dr., D-7630 Lahr 17 (DE); Ose, Günter, D-7633 Seelbach (DE)
(74) Vertreter: Schmitt, Hans, Dipl.-Ing.

(56) Entgegenhaltungen:
- AT-B- 93 285
- US-A- 3 783 318
- PATENT ABSTRACTS OF JAPAN vol. 9no. 230 (E-343) (1953), 17 September 1985; & JP-A- 6084934
- PATENT ABSTRACTS OF JAPAN vol. 10, no. 50 (E-384) (2107), 27 Februar 1986; & JP-A- 60204236
- PATENT ABSTRACTS OF JAPAN vol. 8, no. 115 (E-247) (1552), 29 May 1984; JP-A- 5928847

## Beschreibung

Die Erfindung betrifft einen Elektromotor mit einem aus einem Blechpaket gebildeten Stator, wobei das Blechpaket kreisrunde Bleche aufweist und Bleche oder Blechgruppen dieses Paketes über den Umriß der übrigen Bleche vorstehen und Kühlrippen bilden, und mit einem Befestigungsflansch mit Befestigungslöchern für Befestigungsschrauben für die Montage des Elektromotors.

Ein derartiger Elektromotor ist aus JP-A-60 84934 bekannt. Dabei sind alle vorhandenen Bleche des Blechpaketes mit einem im wesentlichen kreisrunden Umfang versehen, wobei Bleche größeren Durchmessers gegenüber Blechen kleineren Durchmessers überstehen. Die überstehenden Bleche sollen als Kühlrippen für den Stator wirken. Dementsprechend müssen die Bleche des jeweils größeren Durchmessers einen entsprechend breiten umlaufenden Außensteg bilden, um eine genügend große Kühlrippenhöhe zu erlauben. Entsprechend große Außenabmessungen ergeben sich. Darüberhinaus besteht bei einer Ausführungsform, bei der die Außendurchmesser der unterschiedlichen Bleche nicht allzusehr voneinander abweichen, eine Verwechslungsgefahr während der Montage. Vorallem beim Stapeln der sich nur durch den Durchmesser unterscheidenden Bleche könnten Fehler auftreten.

Aus der AT-B 93 285 ist ein Motor mit äußerem Gehäuse und einem aus einem Blechpaket bestehenden Stator bekannt, bei welchem innerhalb des Umrisses kreisrunder Bleche etwa quadratisch geformte Bleche angeordnet sein sollen. Daraus ergibt sich wiederum eine relativ große Breite des umlaufenden, als Kühlrippe wirkenden Steges, was ein entsprechend hohes Gewicht der Anordnung nach sich zieht.
Aufgabe der vorliegenden Erfindung ist es deshalb, einen Elektromotor der eingangs erwähnten Art zu schaffen, bei dem die Montage des Stators einfach ist und bei dem hinsichtlich der Gestaltung der äußeren Form auf einfache Weise eine Anpassung an unterschiedliche Anwendungsfälle möglich ist.

Die Lösung dieser Aufgabe besteht darin, daß die überstehenden Bleche eine mehreckige Umrißform haben und mindestens mit ihren Eckbereichen über die runden Bleche überstehen und daß die überstehenden Bleche in ihren Eckbereichen Ausnehmungen als rückseitigen Zutritt zu den Befestigungsschrauben an dem Befestigungsflansch aufweisen.

Bei dieser Blech-Kombination ist es nicht erforderlich, auf eine bestimmte Drehlage der beiden unterschiedlich ausgebildeten Bleche beziehungsweise Blechgruppen zu achten, so daß insgesamt die Montage erheblich vereinfacht ist. Die Ausnehmungen an den überstehenden Bereichen der mehreckigen Bleche ermöglichen einen geraden Zutritt zu Befestigungsschrauben an dem Befestigungsflansch.

Besonders vorteilhaft ist es, wenn die überstehenden Bleche einen quadratischen Umriß haben. Sie können beliebig in verschiedenen Drehlagen eingebaut werden, ohne daß sich dadurch Bauformänderungen des Stators ergeben. Sie stehen außerdem im wesentlichen in ihren Eckbereichen gegenüber den runden Blechen über.

Zweckmäßigerweise können an wenigstens einem axialen Endbereich des Stators runde Bleche angeordnet sein und dort kann ein Endflansch beziehungsweise Befestigungsflansch zentriert aufgesetzt sein. Dies ergibt auf konstruktiv einfache Weise eine wesentliche Montagehilfe.

Nachstehend ist ein Ausführungsbeispiel der Erfindung anhand der Zeichnung näher erläutert. Es zeigt:
- Fig. 1: eine zum Teil im Schnitt gehaltene Seitenansicht eines erfindungsgemäßen Elektromotors,
- Fig. 2: eine Vorderseitenansicht sowie
- Fig. 3: eine Rückseitenansicht,
- Fig. 4: eine Aufsicht eines runden Statorbleches und
- Fig. 5: eine Aufsicht eines mehreckigen Statorbleches.

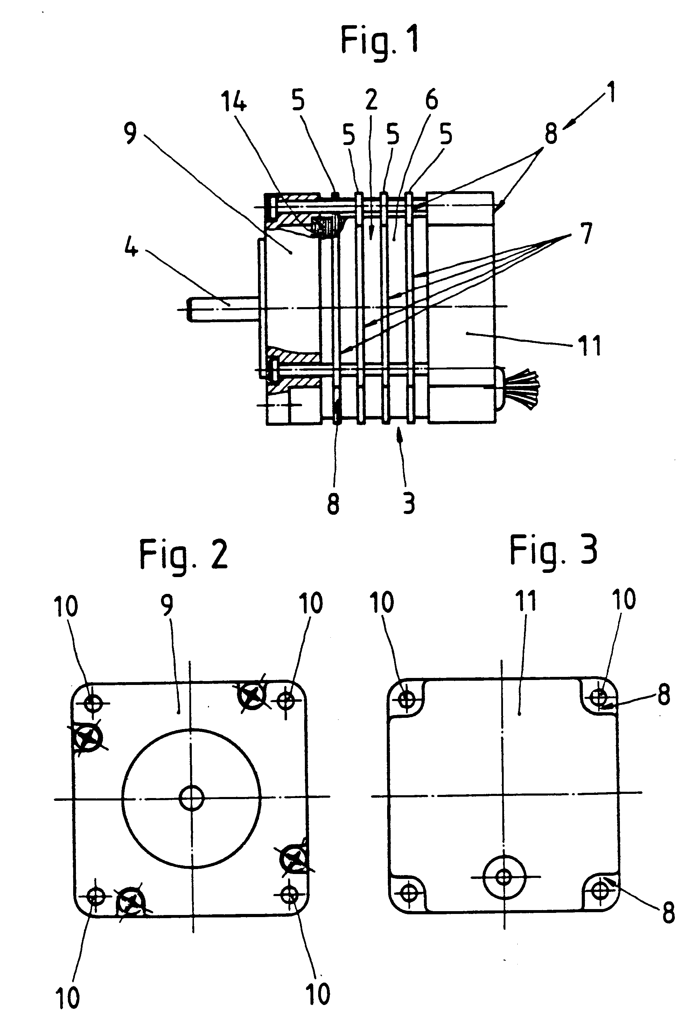

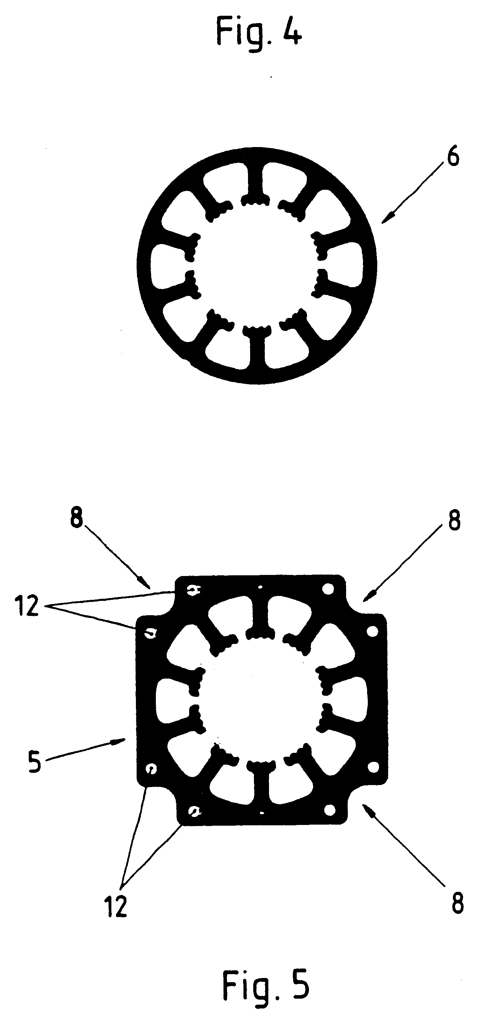

Ein Elektromotor (Fig. 1) hat einen aus einem Blechpaket 2 gebildeten Stator 3, in dem sich ein drehbar gelagerter Rotor mit einer Welle 4 befindet.
Das Stator-Blechpaket 2 weist Bleche 5 oder aus solchen Blechen gebildete Blechgruppen auf, die über den Umriß der übrigen Bleche 6 vorstehen und Kühlrippen 7 bilden. Die Bleche 6 sind, wie in Fig. 4 im einzelnen gezeigt, in ihrem Außenumfangsbereich kreisrund ausgebildet, während die überstehenden Bleche 5 (Fig. 5) eine mehreckige und im Ausführungsbeispiel quadratische Umrißform haben. Die quadratischen Bleche 5 sind hier mit ihrer Gesamtkantenlänge etwas größer als der Durchmesser der runden Bleche 6 ausgebildet. Sie stehen somit im wesentlichen in den Eckbereichen über.
In diesen Eckbereichen weisen die überstehenden Bleche 5 Ausnehmungen 8 auf, die einen rückseitigen Zutritt von Befestigungsschrauben an einem vorderen Befestigungsflansch 9 ermöglichen. Dieser Befestigungsflansch ist in Fig. 2 von seiner Vorderseite her erkennbar und seine Eckbereiche mit Befestigungslöchern 10 sind auch von der Rückseite des Elektromotors 1 gemäß der in Fig. 3 gezeigten Ansicht erkennbar, da in den Blechen 5 und auch in einem rückseitigen Abschlußdeckel 11 entsprechende Ausnehmungen 8 vorhanden sind.
Die eckigen Bleche 5 weisen außerdem in Montagestellung fluchtende Löcher 12 auf, durch die einerseits am Befestigungsflansch 9 und andererseits am Abschlußdeckel 11 angreifende Haltebolzen 13 zum Zusammenhalten des gesamten Stators 3 durchgreifen (vgl. Fig. 1 und 2).
In Fig. 5 ist erkennbar, daß diese Löcher 12 jeweils beidseits der Ausnehmungen 8 in den überstehenden Eckbereichen vorgesehen sind. Wie in Fig. 2 erkennbar, sind von diesen beiden Löchern 12 in jedem Eckbereich nur eines benutzt. Aus der Anordnung von jeweils zwei Löchern ergibt sich jedoch eine Lageunabhängigkeit (Wendelage) der Bleche 5 bei der Montage.

Durch den kombinierten Einsatz von runden Blechen 6 und eckigen Blechen 5 besteht die Möglichkeit, daß an den Enden des Stators 3 runde Bleche 6 vorgesehen werden können, die dann zur zentrierten Montage des Befestigungsflansches 9 und auch des Abschlußdeckels 11 dienen. Da der Befestigungsflansch und auch der Abschlußdeckel 11 gleichzeitig Lagerschilde bilden, in denen sich die Lager für die Rotorwelle 4 befinden, erhält man durch diese Zentriermöglichkeit durch die Enden des Stator-Blechpaketes 2 eine exakte Lagezuordnung von Rotor und Stator. Der Befestigungsflansch 9 und auch der Abschlußdeckel 11 sind mit sacklochförmigen Ausdrehungen 14 versehen, deren lichtes Innenmaß dem Außendurchmesser der runden Bleche 6 entsprechen.

Anstatt von im wesentlichen quadratischen Blechen 5 können auch andere mehreckige, symmetrische Bleche 5 vorgesehen sein. Beispielsweise lassen sich auch sechseckige Bleche einsetzen.
Mit den beiden zur Verfügung stehenden Blechschnittenrund und mehreckig - lassen sich eine Vielzahl von unterschiedlichen Statoraufbauten realisieren. Beispielsweise lassen sich die überstehenden Bleche in ihrer Anzahl und ihrem Abstand zueinander sowie in ihrer Anordnung bezogen auf die Längserstreckung des Stators variieren, wobei auch spezielle Kühlprobleme gelöst werden können.
Darüber hinaus ist auch außer einem "gemischten" Einsatz der vorhandenen Blechschnitte die Verwendung nur der runden oder aber nur der mehreckigen Bleche möglich.
Bei Verwendung ausschließlich von runden Blechen 6 ergibt sich ein durchgehend kreisrunder Querschnitt des Stators und somit unter anderem auch eine besonders gute Einbaumöglichkeit in ein Rohr. Wird der Elektromotor beispielsweise im Impulsbetrieb gefahren, sollte eine große Kühlmasse zur Verfügung stehen, die durch ausschließlichen Einsatz von mehreckigen Blechen 5 erreicht werden kann. Insgesamt ist somit eine Vielzahl von Variationsmöglichkeiten des Stator-Blechpaketes 2 möglich.

## Patentansprüche

1. Elektromotor (1) mit einem aus einem Blechpaket (2) gebildeten Stator (3), wobei das Blechpaket (2) kreisrunde Bleche (6) aufweist und Bleche (5) oder Blechgruppen dieses Paketes (2) über den Umriß der übrigen Bleche (6) vorstehen und Kühlrippen (7) bilden, und mit einem Befestigungsflansch (9) mit Befestigungslöchern (10) für Befestigungsschrauben für die Montage des Elektromotors (1), dadurch gekennzeichnet, daß die überstehenden Bleche (5) eine mehreckige Umrißform haben und mindestens mit ihren Eckbereichen über die runden Bleche (6) überstehen und daß die überstehenden Bleche (5) in ihren Eckbereichen Ausnehmungen (8) als rückseitigen Zutritt zu den Befestigungsschrauben an dem Befestigungsflansch (9) aufweisen.

2. Elektromotor nach Anspruch 1, dadurch gekennzeichnet, daß die überstehenden Bleche (5) einen quadratischen Umriß haben.

3. Elektromotor nach Anspruch 1 oder 2, dadurch gekennzeichnet, daß die Ausnehmungen (8) in den Eckbereichen der überstehenden Bleche (5) randoffen sind.

4. Elektromotor nach einem der Ansprüche 1 bis 3, dadurch gekennzeichnet, daß die überstehenden Bleche (5) in Montagestellung fluchtende Löcher (12) für Haltebolzen (13) in ihren Eckbereichen aufweisen.

5. Elektromotor nach einem der Ansprüche 1 bis 4, dadurch gekennzeichnet, daß die Kantenlänge der überstehenden Bleche (5) etwa dem Durchmesser der runden Bleche (6) entspricht.

6. Elektromotor nach einem der Ansprüche 1 bis 5, dadurch gekennzeichnet, daß die Längsseiten der überstehenden Bleche (5) tangential zu dem Umriß der runden Bleche (6) angeordnet sind.

7. Elektromotor nach einem der Ansprüche 1 bis 6, dadurch gekennzeichnet, daß an wenigstens einem axialen Endbereich des Stators (3) runde Bleche (6) angeordnet sind und daß dort ein Endflansch beziehungsweise Befestigungsflansch (9) zentriert aufgesetzt ist.

## Claims

1. An electric motor (1) having a stator (3) composed of a laminated core (2), said laminated core (2) having circular laminations (6) and laminations (5) or groups thereof projecting over the contour of the other laminations (6) and forming cooling fins (7), and further having a mounting flange (9) with mounting holes (10) for fastening bolts for mounting the electric motor (1), characterized in that the projecting laminations (5) have a polygonal outer contour and have at least their corner areas projecting over the round laminations (6), and that the corner areas of the projecting laminations (5) have recesses (8) as rear access to the fastening bolts at the mounting flange (9).

2. An electric motor as claimed in claim 1, characterized in that the projecting laminations (5) have a square contour.

3. An electric motor as claimed in claim 1 or claim 2, characterized in that the recesses (8) in the corner areas of the projecting laminations (5) are open-ended.

4. An electric motor as claimed in any one of claims 1 to 3, characterized in that the corner areas of the projecting laminations (5) have holes (12) for fixing bolts (13), said holes being in alignment in the mounting position.

5. An electric motor as claimed in any one of claims 1 to 4, characterized in that the edge length of the projecting laminations corresponds approximately to the diameter of the round laminations (6).

6. An electric motor as claimed in any one of claims 1 to 5, characterized in that the longitudinal sides of the projecting laminations (5) are arranged tangentially to the contour of the round laminations (6).

7. An electric motor as claimed in any one of claims 1 to 6, characterized in that round laminations (6) are arranged at at least one axial end zone of the stator (3) and that there a terminal flange or mounting flange (9) is attached in a centred condition.

## Revendications

1. Moteur électrique (1) avec un stator (3) composé d'un paquet de tôles (2) présentant des tôles circulaires (6), des tôles (5) ou des groupes de tôles de ce paquet (2) dépassant du périmètre des tôles restantes (6) et formant des ailettes de refroidissement (7), et avec une bride de fixation (9) comportant des trous de fixation (10) pour des vis de fixation et destinée à monter le moteur électrique (1), caractérisé en ce que les tôles saillantes (5) ont un contour polygonal et dépassent au moins avec leurs zones d'angle les tôles circulaires (6), et en ce que les tôles saillantes (5) présentent des découpes (8) dans leurs zones d'angle afin de pouvoir accéder par l'arrière aux vis de fixation sur la bride de fixation (9).

2. Moteur électrique selon la revendication 1, caractérisé en ce que les tôles saillantes (5) présentent un périmètre carré.

3. Moteur électrique selon la revendication 1 ou 2, caractérisé en ce que les découpes (8) dans les zones d'angle des tôles saillantes (5) n'ont pas de bord.

4. Moteur électrique selon l'une des revendications 1 à 3, caractérisé en ce que, en position de montage, les tôles saillantes (5) présentent, dans leurs zones d'angle, des trous (12) en alignement pour des boulons de retenue (13).

5. Moteur électrique selon l'une des revendications 1 à 4, caractérisé en ce que la longueur de côté des tôles saillantes (5) correspond environ au diamètre des tôles circulaires (6).

6. Moteur électrique selon l'une des revendications 1 à 5, caractérisé en ce que les côtés des tôles saillantes (5) sont disposés de manière tangentielle par rapport au périmètre des tôles circulaires (6).

7. Moteur électrique selon l'une des revendications 1 à 6, caractérisé en ce que des tôles circulaires (6) sont au moins disposées dans une zone d'extrémité axiale du stator (3) et qu'à cet endroit une bride terminale ou une bride de fixation (9) est montée de manière centrée.
